# EUROPEAN PATENT APPLICATION

(11) **EP 4 414 894 A2**
(43) Date of publication of application: **14.08.2024**
(21) Application number: 24185231.8
(22) Date of filing: 25.03.2019
(51) Int. Cl.: G06N 3/045

(54) **ADAPTIVE ARTIFICIAL INTELLIGENCE SYSTEM FOR EVENT CATEGORIZING BY SWITCHING BETWEEN DIFFERENT STATES**

(30) Priority: 29.03.2018 NL 2020685
(62) Divisional of application: 19726181.1
(71) Applicant: Kepler Vision Technologies B.V., 1091 SE Amsterdam (NL)
(72) Inventor: van Oldenborgh, Marc Jean Baptist, 1091 SE Amsterdam (NL); Stokman, Henricus Meinardus Gerardus, 1091 SE Amsterdam (NL)
(74) Representative: Patent Business B.V.

(57) **Abstract**

The invention provides an artificial intelligence (AI) system for categorizing events, said AI system comprising a first state and a second state, wherein:
- said AI system is in a first state for categorizing events in a first category type;
- upon categorizing of a first event in a predefined category of said first category type, said AI system is set to said second state, in said second state said AI system is set for categorizing subsequent events in a second category type.

## Description

### Field of the invention

The invention relates to an Artificial intelligence (AI) system, a method for categorizing events, and software for an artificial intelligence (AI) system for categorizing events.

### Background of the invention

Artificial intelligence (AI) is developing rapidly and AI applications are supporting or will support all industries including the aerospace industry, agriculture, chemical industry, computer industry, construction industry, defence industry, education industry, energy industry, entertainment industry, financial services industry, food industry, health care industry, hospitality industry, information industry, manufacturing, mass media, mining, telecommunication industry, transport industry, water industry and direct selling industry.

The ability to monitor and/or to control systems is an area wherein AI can be very useful. Another area is the understanding of human behaviour and interaction. In order to do that, AI systems should be able to detect and to recognize events in real-time. This requires smart approach using software, such as deep neural networks, and powerful computer hardware to execute computations within milliseconds.

In "Computationally Efficient Target Classification in Multispectral Image Data with Deep Neural Networks", November 2016, by Lukas Cavigellia et al. (https://arxiv.org/abs/1611.03130) according to its abstract describes "Detecting and classifying targets in video streams from surveillance cameras is a cumbersome, error-prone and expensive task. Often, the incurred costs are prohibitive for real-time monitoring. This leads to data being stored locally or transmitted to a central storage site for post-incident examination. The required communication links and archiving of the video data are still expensive and this setup excludes pre-emptive actions to respond to imminent threats. An effective way to overcome these limitations is to build a smart camera that analyses the data on-site, close to the sensor, and transmits alerts when relevant video sequences are detected."

In "Embedded Real-Time Fall Detection Using Deep Learning For Elderly Care", November 2017, by Hyunwoo Lee et al. (https://arxiv.org/abs/1711.11200) according to its abstract describes "This paper proposes a real-time embedded fall detection system using a DVS(Dynamic Vision Sensor) that has never been used for traditional fall detection, a dataset for fall detection using that, and a DVS-TN(DVS-Temporal Network). The first contribution is building a DVS Falls Dataset, which made our network to recognize a much greater variety of falls than the existing datasets that existed before and solved privacy issues using the DVS. Secondly, we introduce the DVS-TN : optimized deep learning network to detect falls using DVS. Finally, we implemented a fall detection system which can run on low-computing H/W with real-time, and tested on DVS Falls Dataset that takes into account various falls situations. Our approach achieved 95.5% on the F1-score and operates at 31.25 FPS on NVIDIA Jetson TX1 board."

In "Deep Learning and Data Assimilation for Real-Time Production Prediction in Natural Gas Wells", February 2018, by Kelvin Lohet et al. (https://arxiv.org/abs/1802.05141) according to its abstract describes "The prediction of the gas production from mature gas wells, due to their complex end-of-life behavior, is challenging and crucial for operational decision making. In this paper, we apply a modified deep LSTM model for prediction of the gas flow rates in mature gas wells, including the uncertainties in input parameters. Additionally, due to changes in the system in time and in order to increase the accuracy and robustness of the prediction, the Ensemble Kalman Filter (EnKF) is used to update the flow rate predictions based on new observations. The developed approach was tested on the data from two mature gas production wells in which their production is highly dynamic and suffering from salt deposition. The results show that the flow predictions using the EnKF updated model leads to better Jeffreys' J-divergences than the predictions without the EnKF model updating scheme."

In "Anomaly Detection in a Digital Video Broadcasting System Using Timed Automata", May 2017, by Xiaoran Liu et al. (https://arxiv.org/abs/1705.09650) according to its abstract describes "This paper focuses on detecting anomalies in a digital video broadcasting (DVB) system from providers' perspective. We learn a probabilistic deterministic real timed automaton profiling benign behavior of encryption control in the DVB control access system. This profile is used as a one-class classifier. Anomalous items in a testing sequence are detected when the sequence is not accepted by the learned model."

In "Real-time Road Traffic Information Detection Through Social Media", January 2018, by Chandra Khatri (https://arxiv.org/abs/1801.05088) according to its abstract describes "In current study, a mechanism to extract traffic related information such as congestion and incidents from textual data from the internet is proposed. The current source of data is Twitter. As the data being considered is extremely large in size automated models are developed to stream, download, and mine the data in real-time. Furthermore, if any tweet has traffic related information then the models should be able to infer and extract this data.

Currently, the data is collected only for United States and a total of 120,000 geo-tagged traffic related tweets are extracted, while six million geo-tagged non-traffic related tweets are retrieved and classification models are trained. Furthermore, this data is used for various kinds of spatial and temporal analysis. A mechanism to calculate level of traffic congestion, safety, and traffic perception for cities in U.S. is proposed. Traffic congestion and safety rankings for the various urban areas are obtained and then they are statistically validated with existing widely adopted rankings. Traffic perception depicts the attitude and perception of people towards the traffic.

It is also seen that traffic related data when visualized spatially and temporally provides the same pattern as the actual traffic flows for various urban areas. When visualized at the city level, it is clearly visible that the flow of tweets is similar to flow of vehicles and that the traffic related tweets are representative of traffic within the cities. With all the findings in current study, it is shown that significant amount of traffic related information can be extracted from Twitter and other sources on internet. Furthermore, Twitter and these data sources are freely available and are not bound by spatial and temporal limitations. That is, wherever there is a user there is a potential for data."

US20050102098 according to its abstract describes "A vehicle navigation system that is capable of learning user habits/preferences, mistakes in a digital map database, and new roads that may have been added or constructed after release of the digital map database is disclosed. The vehicle navigation system monitors a driver's habits and updates a database to thereby cause the vehicle navigation system to have a preference for the driver's habits. The vehicle navigation system may also monitor the geographic position of the vehicle and allow the driver to update or change data contained in the digital map database if an error exists. The vehicle navigation system is also capable of learning new roads that exist that are not included in the road network map of the digital map database and is also capable of adding these new roads to the digital map database."

US9763253 according to its abstract describes "A virtual skeleton includes a plurality of joints and provides a machine readable representation of a human subject observed with a sensor such as a depth camera. A gesture detection module is trained via machine learning to identify one or more features of a virtual skeleton and indicate if the feature(s) collectively indicate a particular gesture."

"Deep learning prototype domains for person re-identification" by Arne Schumann et al., ICIP 2017, pages 1767-1771, according to its abstract describes "Person re-identification (re-id) is the task of matching multiple occurrences of the same person from different cameras, poses, lighting conditions, and a multitude of other factors which alter the visual appearance. Typically, this is achieved by learning either optimal features or distance metrics which are adapted to specific pairs of camera views dictated by the pairwise labelled training datasets. In this work, we formulate a deep learning based novel approach to automatic prototype domain discovery for domain perceptive person re-id. The approach scales to new and unseen scenes without requiring new training data. We learn a separate re-id model for each of the discovered prototype-domains and during model deployment, use the person probe image to automatically select the model of the closest prototype-domain. Our approach requires neither supervised nor unsupervised transfer learning, i.e. no data available from target domains. Extensive evaluations are carried out using automatically detected bounding boxes with low-resolution and partial occlusion on two large scale re-id benchmarks, CUHK-SYSU and PRW. Our approach outperforms state-of-the-art unsupervised methods significantly and is competitive against supervised methods which use labelled test domain data."

"Towards a fuzzy-based multi-classifier selection module for activity recognition applications" by Henar Martin et al., 4th International Workshop on Sensor Networks and Ambient Intelligence 2012, Lugano (23 March 2012), pages 871-876, according to its abstract describes "Performing activity recognition using the information provided by the different sensors embedded in a smartphone face limitations due to the capabilities of those devices when the computations are carried out in the terminal. In this work a fuzzy inference module is implemented in order to decide which classifier is the most appropriate to be used at a specific moment regarding the application requirements and the device context characterized by its battery level, available memory and CPU load. The set of classifiers that is considered is composed of Decision Tables and Trees that have been trained using different number of sensors and features. In addition, some classifiers perform activity recognition regardless of the on-body device position and others rely on the previous recognition of that position to use a classifier that is trained with measurements gathered with the mobile placed on that specific position. The modules implemented show that an evaluation of the classifiers allows sorting them so the fuzzy inference module can choose periodically the one that best suits the device context and application requirements."

"Energy-efficient adaptive classifier design for mobile systems" by Zafar Takhirow et al., ISLPED '16, August 08-10, 2016, San Francisco Airport, CA, USA, DOl: http:// dx.doi.org/10.1145 /2934583.2934615, according to its abstract describes "With the continuous increase in the amount of data that needs to be processed by digital mobile systems, energy-efficient computation has become a critical design constraint for mobile systems. In this paper, we propose an adaptive classifier that leverages the wide variability in data complexity to enable energy-efficient data classification operations for mobile systems. Our approach takes advantage of varying classification "hardness" across data to dynamically allocate resources and improve energy efficiency. On average, our adaptive classifier is about 100x more energy efficient but has abt. 1% higher error rate than a complex radial basis function classifier and is about 10x less energy efficient but has about 40% lower error rate than a simple linear classifier across a wide range of classification data sets.

### Summary of the invention

The known AI systems are usually very specifically trained. The current invention seeks to provide a system that applies or uses AI in a more flexible way. For instance, to use less or more resources in a flexible manner. For example, to detect events faster and/or in better detail, using more resources. In another or alternative way, the current invention seeks to provide a system that can have only limited ability to detect events, using limited resources. As a result the proposed artificial intelligence system is more efficiently using its resources than currently known artificial intelligence systems. In particular when an artificial intelligence system is for instance running on limited power or needs to uses a limited amount of energy, for instance when running on batteries.

To that end, the invention provides an artificial intelligence (AI) system of claim 1.

An artificial intelligence system according to the invention adapts to its environment in order to detect events. Therefore the artificial intelligence system has different states of operation. Depending on the state the artificial intelligence system uses less or more resources. For example, the artificial intelligence system can be in a state wherein it detects events faster and/or in better detail, using more resources. In another state the artificial intelligence system can be in a state wherein it has only limited ability to detect events, using limited resources. As a result the artificial intelligence system is more efficiently using its resources than currently known artificial intelligence systems. In particular when an artificial intelligence system is running on batteries, this is very beneficial since power-consumption will be reduced.

An event is an action or occurrence detected by an AI system. In particular when related to living beings, an event is a gesture, pose, action, or motion that communicates the intent (to run), involuntary state (feeling down), or voluntary state (thinking/running) of a living being or group of living beings.

Detection is the ability of an AI system to recognize an event or occurrence. In particular when related to living beings, event detection includes analyzing a living being subject's full or partial body while the body is moving or static to determine whether or not a particular event is being intended to be performed. It also can analyse the environment and context over time and space. Event detection also can include applying the same analysis for multiple living beings or objects and their interaction.

Categorizing an event is the process of matching up an event to at least one category. In particular categorizing an event is detecting the event and assigning it to one or multiple categories and possibly assigning a confidence level and/or probability for each category.

A category type is a catalogue of one or more categories of events that can be associated to one or more conditions, or to a description. If associated, the one or more conditions or description determine life whether or not a category of events belongs to the category type.

As mentioned above, artificial intelligence (AI) is developing rapidly and the current AI system can be integrated or used in AI applications that are supporting or will support all industries including the aerospace industry, agriculture, chemical industry, computer industry, construction industry, defence industry, education industry, energy industry, entertainment industry, financial services industry, food industry, health care industry, hospitality industry, information industry, manufacturing, mass media, mining, telecommunication industry, transport industry, water industry and direct selling industry.

A current AI system can be applied to and integrated in many different larger systems. The AI system can be physically integrated in such a larger system, or it can be functionally coupled to such a larger system. For instance, the AI system can be part of a vehicle, a plane, a boat, part of an energy plant, part of a production facility, part of a payment system, a drone or a robotic system.

The ability to monitor and control systems is an area wherein AI can be very useful. Another area is the understanding of human behaviour and interaction. Therefore, AI systems in an embodiment are used to detect and to recognize events in real-time. This requires a smart approach using software, such as deep neural networks, and powerful computer hardware to execute computations within milliseconds. In the current AI system, a trained neural network can be used.

In an embodiment, the AI system in said second state categorizes said events functionally real-time. In for instance applications for driving a car, in the first state a surrounding is monitored, in a real-time mode, at such a speed that it allows a vehicle to be brought to a stop before a collision or other event takes place. In the first state, a potential hazardous situation is categorized. In such an instance, the AI system is switched to a second alert state for actually analyzing subsequent events in more detail at a higher speed.

In an embodiment, the AI system in said first and second state categorizes said events functionally real-time. In such embodiments, the system can for instance be used for controlling and managing live processes. This may for instance comprise operating in traffic situations, in industrial processes, and in giving care to real people.

In an embodiment, upon categorizing said subsequent event in a predefined category of said second category type, said AI system returns to said first state. Thus, after a dangerous situation is categorized and in said second state a subsequent event is categorized which indicates that a situation is no longer dangerous or potentially dangerous, the AI system can return in the first state. This can for instance be a situation in which less events are categorized per unit time, or where image data of a lower resolution are used.

In an embodiment, in said second state said AI system for categorizing an event uses different system resources in comparison to categorizing an event in said first state. In an embodiment, in said second state said AI system for categorizing an event uses different data in comparison to categorizing an event in said first state. In an embodiment, in said second state said AI system for categorizing an event uses more system resources in comparison to categorizing an event in said first state. In an embodiment, in said second state said AI system for categorizing an event uses more time in comparison to categorizing an event in said first state. In an embodiment, in said second state said AI system for categorizing an event uses more energy in comparison to categorizing an event in said first state. In an embodiment, in said second state said AI system for categorizing an event uses more data in comparison to categorizing an event in said first state. In an embodiment, in said second state said AI system for categorizing an event uses less system resources in comparison to categorizing an event in said first state. In an embodiment, in said second state said AI system for categorizing an event uses less time in comparison to categorizing an event in said first state. In an embodiment, in said second state said AI system for categorizing an event uses less energy in comparison to categorizing an event in said first state. In an embodiment, in said second state said AI system for categorizing an event uses less data in comparison to categorizing an event in said first state.
In an embodiment, in said second state said AI system for categorizing an event uses a combination of the items mentioned above.

In an embodiment the AI system analyzes a communication stream and detects an suspect pattern, the system can switch to a machine learning model that employs more compute power to decode the communication stream or that uses more data to analyze the communication stream.

In an embodiment, the AI system can be operational coupled to a milking machine. In such an application, it can detect that the milk production of a cow, whose health it monitors detects, shows unusual "outlier" pattern which is not life threatening. Upon detection of such an event, the AI system may interrupt its monitoring mode and switch to an analyzing mode, and explore databases (big data) to recognize what the pattern is about.

In an embodiment when the AI system is in a mode where it trains itself to a new particular task, while it is under the constraint that the training data should be anonymous, the system may detect that it can infer with certain probability the origin of the data. In this case, the system may switch itself to a mode where it "unlearns" its most recently gained knowledge.

In an embodiment when the AI system is in a mode and it is detected that the resources of the host physical device become scarce, the AI system may switch itself into another mode where it discards the least significant bits of its neural network. It may switch itself for instance into a life-saving mode, using a neural network that consists of only its most rudimentary, most significant bits.

In an embodiment, the AI system is in general servicing modus, and then suddenly recognizes a previous customer that it has served before and has interacted with before. The system then switches to the particular machine learning model it trained before on that customer, so that the service system can provide better and more personalized service.

In an embodiment, the AI system is attempting to repair a physical device, and upon encountering an unexpected situation, the system may then deliberately switch itself into a mode in which it attempts a number of different solutions to solve the situation, and evaluates them before disassembling the solution.

In an embodiment, the AI system is in a surveillance mode and upon detecting a true life threatening situation for the humans it serves, it may switch itself to the modus best fit to protect these humans.

In an embodiment, the AI system is controlling a particular physical cleaning device and detects that its underground is not fit for a cleaning program it is running. It may then switch to an alternative algorithm that tries to learn on the spot how to better clean the underlying substrate.

In an embodiment, the AI system is providing assistance during surgery, and upon detecting a suddenly occurring health complication, the system may switch itself to the dedicated neural network best suited for the complication.

In an embodiment, the AI system comprises a series of states comprising said first and second state, and wherein each of said states comprises a category type, resulting in a series of category types comprising said first and second category type.

The current invention enables or provides a multi-level AI system. A system comprising such an AI system can for instance switch between states of alertness. It for instance allows identifying potentially hazardous situations, switch to a states where the situation is evaluated in more detail. In case for instance a subsequent event is categorized as having a high risk, the system can be set into a high-speed state where events are evaluated at high speed. If yet a subsequent event is categorized as low risk, the system may be set back to a situation of low alertness. In such an embodiment, the AI system changes between states of said series of states.

In an embodiment, each category type of each of said series of states comprises at least one predefined category, and wherein categorizing an event in said predefined category results in a change of state.

In an embodiment, at least one category type of at least one of said states comprises a series of said predefined categories, each predefined category linking to at least one of said states, wherein categorizing of an event in one of said predefined categories causes said AI system to be set another of said series of states.

In an embodiment, the AI system further comprises a data input device for providing a stream of data, wherein a change in said stream of data results in an event that is part of said events for categorizing. In general, a stream of date comprises a stream of digital, or binary, data. Such a stream of bits may comprise digital documents, mails, or other digital data that is transmitted from one point to another point. In an embodiment, such a stream of data may comprise a time series of measured physical parameters, or a recorded film, a series of pictures, a time series of pictures, life data from one or more camera's, sound that has been recorded or that is being recorded, and combinations thereof.

The data input device can provide for instance pictures, moving image data, sound data, or other data.

In an embodiment, the AI system comprises a plurality of said data input devices for providing said stream of data. An example of potential input device may include a LIDAR, a camera, a proximity detector, a microphone, a sonar, a radar, a laser, a thermometer, an infrared camera, a speedometer, an odometer, an air analyzer and a network device.

In an embodiment, the AI system further comprises a sensor operationally coupled to a said data input device. In such an embodiment, input from various devices may be combined for providing an event.

In an embodiment, the AI system comprises at least two trained machine learning networks, wherein in said first state said AI system uses a first trained machine learning network of said at least two trained machine learning networks for said categorizing events in said first category type, and in said second state said AI system uses a second trained machine learning network of said at least two trained machine learning networks for said categorizing events in said second category type.

The invention is applicable in principle to any machine learning methodology, and not restricted to deep learning networks.

In an embodiment, the AI system comprises a data processor and software which when running on said data processor:
- sets said AI system in said first state;
- receives data;
- deducts events from said data;
- categorizing said events in a first category type;
- upon categorizing one of said events as said first event in a predefined category of said first category type, sets said AI system to said second state, and
- receives subsequent data;
- deducts subsequent events from said data;
- categorizes said subsequent events in a second category type.

The invention further relates to a method for categorizing events, comprising:
- providing an AI system;
- changing said AI system between a first state and a second state, wherein:
- in said first state said AI system categorizes events in a first category type;
- upon categorizing a first event in a predefined category of said first category type, said AI system is set to said second state, and
- in said second state said AI system categorizes subsequent events in a second category type.

In an embodiment of the said AI system comprises a series of states comprising said first and second state, wherein each of said states comprises a category type, resulting in a series of category types comprising said first and second category type, wherein:
- said AI system is in said first state and categorizes events in a first category type;
- upon categorizing a first event in a predefined category of said first category type, said AI system is set to said second state, and
- in said second state said AI system categorizes subsequent events in a second category type.

In an embodiment of the method, the AI system changes between states of said series of states.

In an embodiment of the method, at least one category type of at least one of said states comprises a series of said predefined categories, each predefined category linking to at least one of said states, wherein categorizing of an event in one of said predefined categories sets said AI system to another of said series of states.

In an embodiment of the method, if said AI system is in said second state and upon categorizing a second event in a further predefined category of said second category type, then said AI system is set to said first state.

The invention further relates to Software for an artificial intelligence (AI) system for categorizing events, said AI system comprising a first state and a second state, which software when running on said data processor:
- sets said AI system in said first state;
- receives data;
- deducts events from said data;
- categorizing said events in a first category type;
- upon categorizing one of said events as said first event in a predefined category of said first category type, sets said AI system to said second state, and
- receives subsequent data;
- deducts subsequent events from said data;
- categorizes said subsequent events in a second category type.

The term "substantially", if used, will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of".

The term "functionally" will be understood by, and be clear to, a person skilled in the art. The term "substantially" as well as "functionally" may also include embodiments with "entirely", "completely", "all", etc. Hence, in embodiments the adjective functionally may also be removed. When used, for instance in "functionally parallel", a skilled person will understand that the adjective "functionally" includes the term substantially as explained above. Functionally in particular is to be understood to include a configuration of features that allows these features to function as if the adjective "functionally" was not present. The term "functionally" is intended to cover variations in the feature to which it refers, and which variations are such that in the functional use of the feature, possibly in combination with other features it relates to in the invention, that combination of features is able to operate or function. For instance, if an antenna is functionally coupled or functionally connected to a communication device, received electromagnetic signals that are receives by the antenna can be used by the communication device. The word "functionally" as for instance used in "functionally parallel" is used to cover exactly parallel, but also the embodiments that are covered by the word "substantially" explained above. For instance, "functionally parallel" relates to embodiments that in operation function as if the parts are for instance parallel. This covers embodiments for which it is clear to a skilled person that it operates within its intended field of use as if it were parallel.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices or apparatus herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device or apparatus claims enumerating several means, several of these means may be embodied by one and the same item of hardware. The mere fact that certain measures are recited in mutually different dependent claims does not indicate that a combination of these measures cannot be used to advantage.

The invention further applies to an apparatus or device comprising one or more of the characterising features described in the description and/or shown in the attached drawings. The invention further pertains to a method or process comprising one or more of the characterising features described in the description and/or shown in the attached drawings.

The various aspects discussed in this patent can be combined in order to provide additional advantages. Furthermore, some of the features can form the basis for one or more divisional applications.

### Brief description of the drawings

Embodiments of the invention will now be described, by way of example only, with reference to the accompanying schematic drawings in which corresponding reference symbols indicate corresponding parts, and in which:
FIG 1. schematically depicts an embodiment of the artificial intelligence (AI) system switching to another state.
FIG 2. schematically depicts an embodiment of the artificial intelligence (AI) system switching to another state and back to its original state.
FIG 3. schematically depicts an embodiment of the artificial intelligence (AI) system switching to multiple other states.
FIG 4. schematically depicts an intelligence (AI) system and various input devices.
FIG 5. schematically depicts an embodiment of the artificial intelligence (AI) system in a car switching the autonomous driving level.
FIG 6. schematically depicts an embodiment of the artificial intelligence (AI) system in a car detecting a ball on the road and the awareness of a potential dangerous situation.
FIG 7. schematically depicts an embodiment of the artificial intelligence (AI) system in a drone flying high and low above the ground.
FIG 8. schematically depicts an embodiment of the artificial intelligence (AI) system in a healthcare robot diagnosing a patient.
FIG 9. schematically depicts an embodiment of the artificial intelligence (AI) system eavesdropping a communication signal.

The drawings are not necessarily on scale.

### Description of preferred embodiments

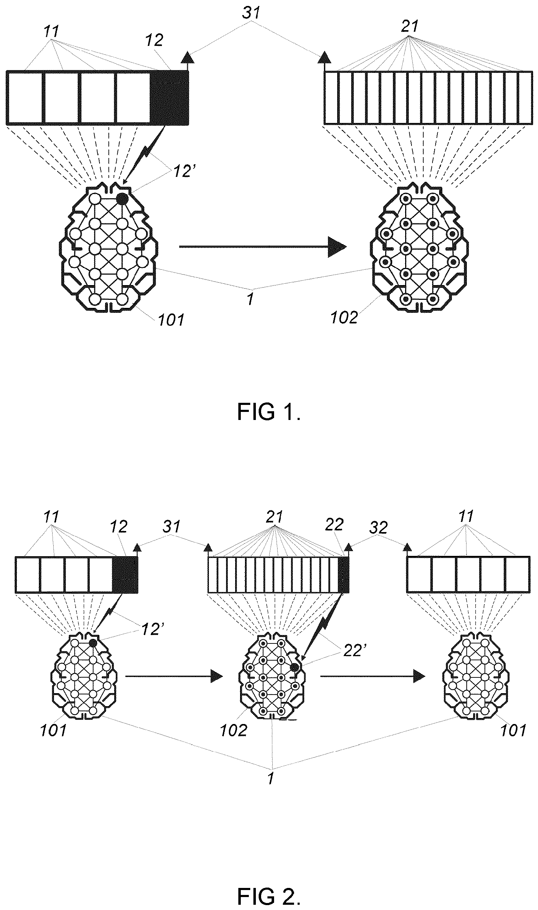

FIG 1. schematically depicts an AI system 1 in state 101 categorizing events in a first category type 11. An event of category type 11 in predefined event category 12 triggers (12') the AI system 1 in state 101 to switch to another state 102 in which the AI system 1 categorizes, from marker 31, subsequent events in a second category type 21.
In an embodiment of the invention the second category type 21 encompasses the categorizing of the first category type 11. In an embodiment the frequency of the categorising in state 102 is lower or higher than in state 101. In an embodiment the AI system 1 in state 102 gets less or more data input to process than in state 101, affecting the complexity of categorizing.
In an embodiment the AI system 1 switches to another trained machine learning model in state 102. As a result the power consumption in state 102 can differ from state 101.

FIG 2. schematically depicts an AI system 1 in state 101 categorizing events in a first category type 11. An event of category type 11 in predefined event category 12 triggers (12') the AI system 1 in state 101 to switch to another state 102 in which the AI system 1 categorizes, from marker 31, subsequent events in a second category type 21. An event of category type 21 in predefined event category 22 triggers (22') the AI system 1 in state 102 to switch back to state 101 in which the AI system 1 categorizes, from marker 32, subsequent events in a first category type 11 again.

Likewise, in an embodiment an AI system 1 has more than 2 states. An AI system 1 categorizes events in each state and changes to another state if a predefined event of these events is categorized by an AI system 1.

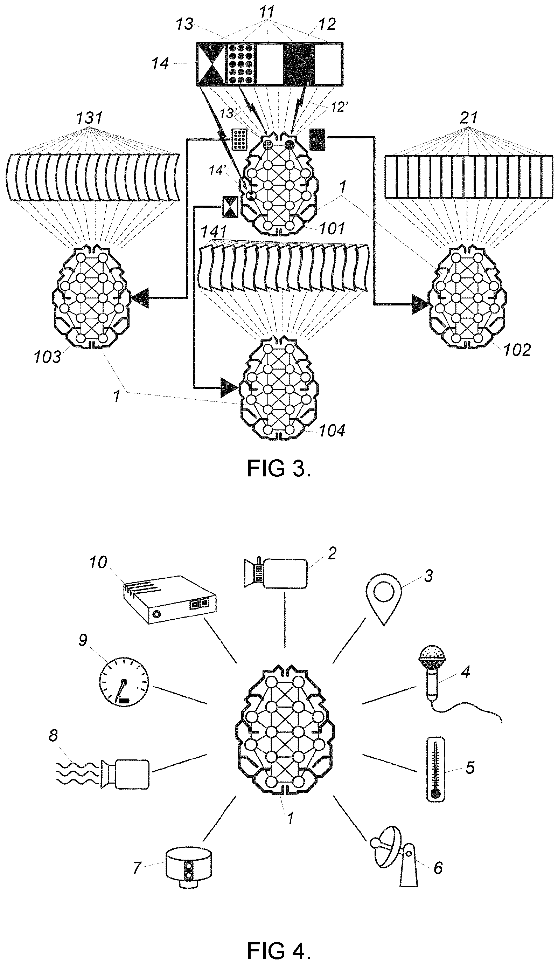

In another embodiment an AI system 1 has multiple predefined event categories in each state as depicted in FIG 3.

FIG 3. schematically depicts an AI system 1 in state 101 categorizing events in a category type 11 with multiple predefined event categories (11, 12, 13 and 14) and switching to multiple states (102, 103 and 104).

Upon categorising an event in predefined event category 14 trigger 14' would set the AI system 1 in state 104 in which the AI system 1 would categorize subsequent events in another category type 141.

Upon categorising an event in predefined event category 13 trigger 13' would set the AI system 1 in state 103 in which the AI system 1 would categorize subsequent events in another category type 131. Upon categorising an event in predefined event category 12 trigger 12' would set the AI system 1 in state 102 in which the AI system 1 would categorize subsequent events in another category type 21.

FIG 4. schematically depicts an AI system 1 operationally coupled to various input devices. In this illustration, the input devices comprising a video camera 2, a GPS device 3, a microphone 4, thermometer 5, a radar 6, a LIDAR 7, an infrared camera 8, an speedometer/odometer 9 and network device 10. All devices can supply a stream of data. The data is digital by nature or is the result from a converted analogue signal.

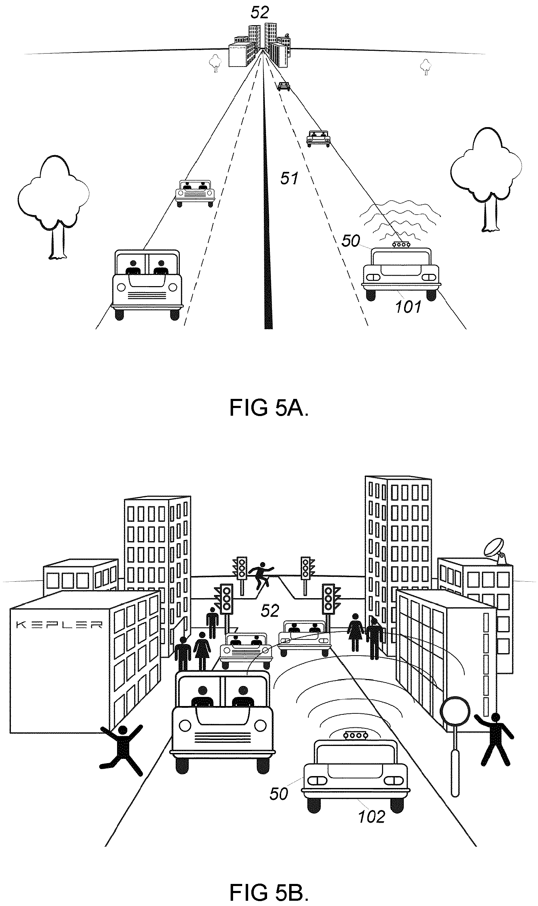

FIG 5A-5B. schematically depicts a car 50 with an AI system 1 (FIG 1.) switching its autonomous driving level.

In FIG 5A. an autonomously driving car 50, with an AI system 1 (FIG 1.) in state 101, is cruising in autonomous driving level 4 on a level 4 designated motorway 51. The car 50 is driving towards an urban environment 52 situated outside the level 4 designated motorway 51.

In FIG 5B. the car 50 is entering the urban environment 52. After leaving the level 4 designated motorway 51 (FIG 5A.) the car has automatically switched to autonomous driving level 5, with an AI system 1 (FIG 1.) in state 102.

In an example a car 50 needs more sensors or input devices and using different system resources when switching to the higher autonomous driving level 5, with an AI system 1 (FIG 1.) in state 102.

Car 50 may, after driving in the urban environment 52, return to the level 4 designated motorway 51 (FIG 5A.) and switch back to autonomous driving level 4, with an AI system 1 (FIG 1.) in state 101.

In another example, when a car 50 is not able to drive in autonomous driving level 5, a car 50 could switch automatically to a lower autonomous driving level (level 3, 2 or 1) by safely leaving the autonomous driving level 4, with an AI system 1 (FIG 1.) in state 101, and waiting for the driver to take over control. When switching to a lower autonomous driving level with an AI system 1 (FIG 1.) in state 102, an AI system 1 (FIG 1.) consumes less power since less processing is needed for a less complicated autonomous driving level. Additionally, in a lower autonomous driving level, an AI system 1 (FIG 1.) does not need all the sensors or input devices required in a higher autonomous driving level. Due to this, power consumption of a car 50 will be further reduced. This will extend the driving range of electric cars.

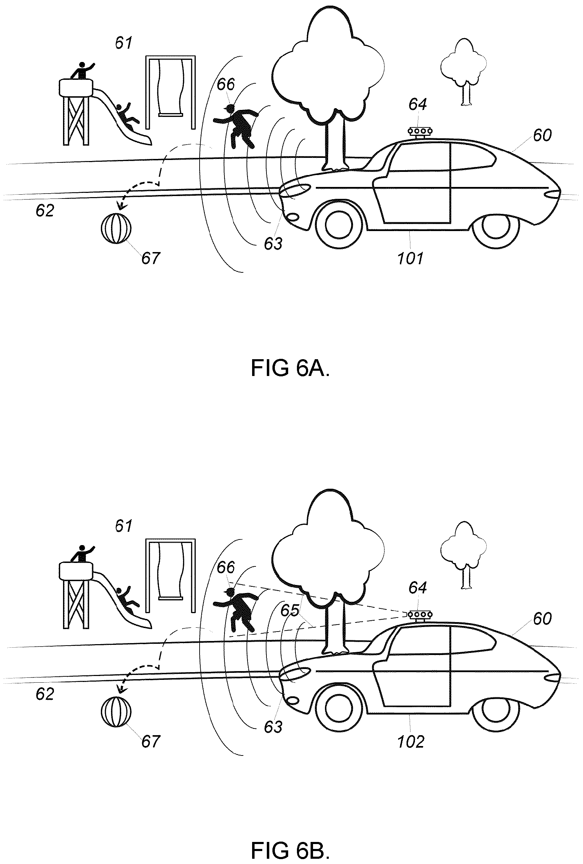

FIG 6A-B. schematically depicts a car 60 with an AI system 1 (FIG 1.) in a driving state 101, operationally coupled to sensors 63 and 64, detecting a ball 67 crossing a road 62 and switching an AI system 1 (FIG 1.) to an alert state 102.

In FIG 6A a sensor 63 (for example a camera or a radar) of car 60, with an AI system 1 (FIG 1.) in driving state 101, registers a ball 67 rolling over a road 62 coming from the direction of playground 61. An AI system 1 (FIG 1.) of car 60 categorizes the rolling ball 67 event in a predefined category 12 (FIG 1.) which sets an AI system 1 (FIG 1.) of car 60 to an alert state 102.

In FIG 6B. a sensor 64 (for instance a camera or a lidar) of car 60 is activated. An AI system 1 (FIG 1.) in state 102 is now categorizing events including the detection 65 of child 66.

In another embodiment both sensors (63 and 64) are active in state 101. When in alert state 102 an AI system 1 (FIG 1.) uses another trained machine learning model than in a driving state 101.

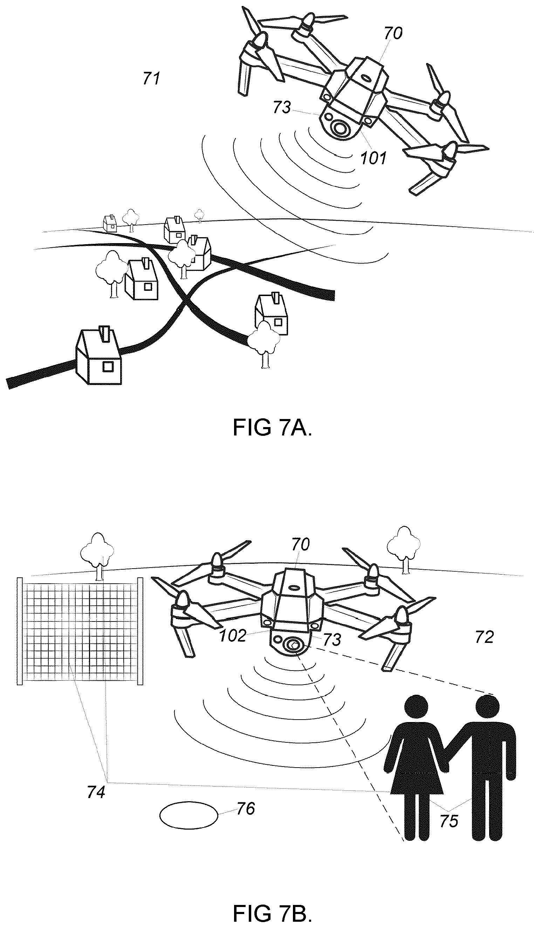

FIG 7A-B. schematically depicts a drone 70 with an AI system 1 (FIG 1.) operationally coupled to sensors 73.

In FIG 7A. the drone 70 is flying at a height level 71 above the ground where there is a lot of freedom to fly and wherein an AI system 1 (FIG 1.) of drone 70 is in state 101. In state 101 an AI system 1 (FIG 1.) of drone 70 is using limited resources, such as battery power and data input from its sensors 73, to operate.

In FIG 7B. the drone 70 is flying at a height level 72 above the ground where there are various obstacles 74 which limit the freedom to fly. An AI system 1 (FIG 1.) of drone 70 is in state 102 and prevents the drone 70 to collide with the various obstacles 74. In state 102 an AI system 1 (FIG 1.) of drone 70 is requiring more resources to operate than in state 101.

In an embodiment a drone 70 is used as a military weapon. With an AI system 1 (FIG 1.) in state 102, a drone 70 uses its AI system 1 (FIG 1.) to select a target 75. Instead of preventing a collision an AI system 1 (FIG 1.) is used to collide with the target 75.

In an embodiment a drone 70 is used for transporting goods. With an AI system 1 (FIG 1.) in state 102, a drone 70 uses its AI system 1 (FIG 1.) to select a landing spot 76 to pick up load.

In an embodiment a drone 70 with AI system 1 (FIG 1.) has more than 2 states, for instance for multiple height levels, different environments (open water environment, industrial environment, flight corridor etc.) and various weather conditions.

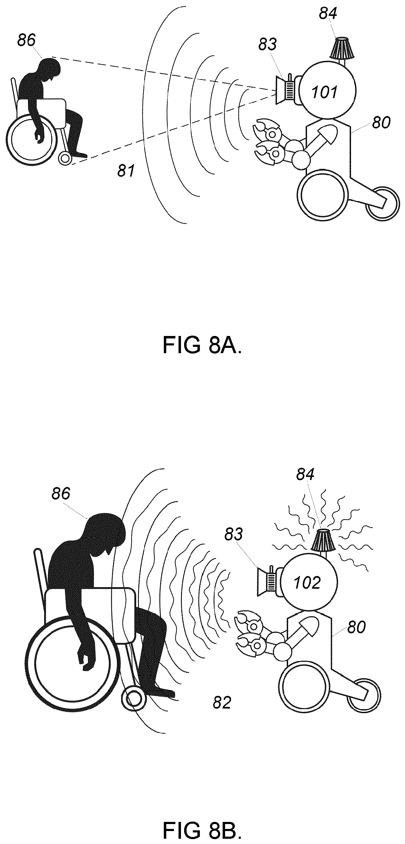

FIG 8A-B. schematically depicts a healthcare robot 80 with an AI system 1 (FIG 1.) and operationally coupled to a camera 83 and an air analyzer sensor 84. Upon detecting a patient 86 in a wheelchair the healthcare robot 80 diagnoses the patient' state of health.

In FIG 8A. a camera 83 of healthcare robot 80, with an AI system 1 (FIG 1.) in state 101, registers a patient 86 in a wheelchair at a distance 81. An AI system 1 (FIG 1.) of healthcare robot 80 categorizes the patient 86 in a predefined category 12 (FIG 1.) which triggers healthcare robot 80 to approach the patient 87 and sets an AI system 1 (FIG 1.) of the healthcare robot 80 to state 102 as depicted in FIG 8B.

In FIG 8B. healthcare robot 80 has approached the patient 87 at a closer distance 82 and an air analyzer sensor 84 of healthcare robot 80 is activated. The AI system 1 (FIG 1.) in state 102 is now categorizing events including the data coming from an air analyzer sensor 84.

In an embodiment a healthcare robot 80 with an AI system 1 (FIG 1.) has more then 2 states, for instance to categorize multiple types of patients and to execute different kinds of diagnoses. Patient types include physically and mentally disabled people, as well as healthy and sick people.

In an embodiment, similar to a healthcare robot 80 with an AI system 1 (FIG 1.), healthcare robot 80 is not used for healthcare but for another industry as listed in the paragraph "Background of the invention".

In an embodiment, similar to a healthcare robot 80 with an AI system 1 (FIG 1.), healthcare robot 80 is not a healthcare robot but is a bomb disposal robot.

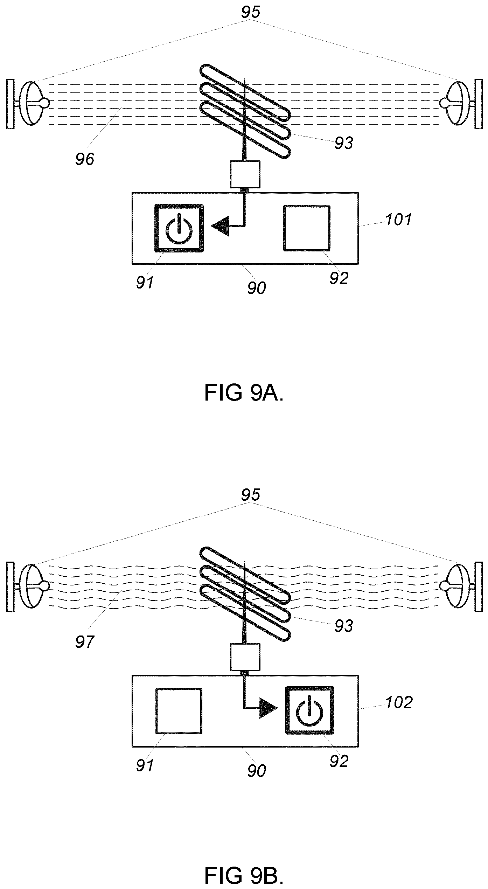

FIG 9A-B. schematically depicts an eavesdropping system 90, with an AI system 1 (FIG 1.) operationally coupled to an antenna 93, eavesdropping communication between sender and receiver 95 resulting in a stream of data comprising patterns of data comprising events, and searching for events to analyse in more detail.

In FIG 9A. an AI system 1 (FIG 1.) in state 101 of eavesdropping system 90 categorizes events resulting from signal 96 with a machine learning model 91.

In FIG 9B. an AI system 1 (FIG 1.) in state 102 of eavesdropping system 90 categorizes events resulting from signal 97 with a machine learning model 92.

It will also be clear that the above description and drawings are included to illustrate some embodiments of the invention, and not to limit the scope of protection. Starting from this disclosure, many more embodiments will be evident to a skilled person. These embodiments are within the scope of protection and the essence of this invention and are obvious combinations of prior art techniques and the disclosure of this patent.

## Claims

1. An artificial intelligence (AI) system for categorizing events, said AI system comprising a first state and a second state, wherein:
- said AI system is in a first state for categorizing events in a first category type;
- upon categorizing of a first event in a predefined category of said first category type, said AI system is set to said second state, in said second state said AI system is set for categorizing subsequent events in a second category type.

2. The AI system of claim 1, wherein said AI system in said second state categorizes said events functionally real-time.

3. The AI system of claim 1 or 2, wherein said AI system in said first and second state categorizes said events functionally real-time.

4. The AI system of any one of the preceding claims, wherein upon categorizing said subsequent event in a predefined category of said second category type, said AI system returns to said first state.

5. The AI system of any one of the preceding claims, wherein in said second state said AI system for categorizing an event uses at least one selected from:
different system resources, different data, more system resources, more time, more energy, more data, less system resources, less time, less energy, less data, and a combination thereof, in comparison to categorizing an event in said first state.

6. The AI system of any one of the preceding claims, wherein said AI system comprises a series of states comprising said first and second state, and wherein each of said states comprises a category type, resulting in a series of category types comprising said first and second category type, in particular wherein said AI system changes between states of said series of states, and/or wherein at least one category type of at least one of said states comprises a series of said predefined categories, each predefined category linking to at least one of said states, wherein categorizing of an event in one of said predefined categories causes said AI system to be set another of said series of states, and/or
wherein each category type of each of said series of states comprises at least one predefined category, and wherein categorizing an event in said predefined category results in a change of state.

7. The AI system of any one of the preceding claims, further comprising a data input device for providing a stream of data, wherein a change in said stream of data results in an event that is part of said events for categorizing, in particular comprising a plurality of said data input devices for providing said stream of data.

8. The AI system of any one of the preceding claim 7, further comprising a sensor operationally coupled to a said data input device.

9. The AI system of any one of the preceding claims, wherein said AI system comprises at least two trained machine learning networks, wherein in said first state said AI system uses a first trained machine learning network of said at least two trained machine learning networks for said categorizing events in said first category type, and in said second state said AI system uses a second trained machine learning network of said at least two trained machine learning networks for said categorizing events in said second category type.

10. The AI system of any one of the preceding claims, wherein said AI system comprises a data processor and software which when running on said data processor:
- sets said AI system in said first state;
- receives data;
- deducts events from said data;
- categorizing said events in a first category type;
- upon categorizing one of said events as said first event in a predefined category of said first category type, sets said AI system to said second state, and
- receives subsequent data;
- deducts subsequent events from said data;
- categorizes said subsequent events in a second category type.

11. A method for categorizing events, comprising:
- providing an AI system;
- changing said AI system between a first state and a second state, wherein:
- in said first state said AI system categorizes events in a first category type;
- upon categorizing a first event in a predefined category of said first category type, said AI system is set to said second state, and
- in said second state said AI system categorizes subsequent events in a second category type,
in particular wherein said AI system comprises a series of states comprising said first and second state, wherein each of said states comprises a category type, resulting in a series of category types comprising said first and second category type, wherein:
- said AI system is in said first state and categorizes events in a first category type;
- upon categorizing a first event in a predefined category of said first category type, said AI system is set to said second state, and
- in said second state said AI system categorizes subsequent events in a second category type,
in particular wherein said AI system changes between states of said series of states.

12. The method of claim 11, wherein at least one category type of at least one of said states comprises a series of said predefined categories, each predefined category linking to at least one of said states, wherein categorizing of an event in one of said predefined categories sets said AI system to another of said series of states.

13. The method of any one of claims 11 or 12, wherein if said AI system is in said second state and upon categorizing a second event in a further predefined category of said second category type, then said AI system is set to said first state.

14. Software for an artificial intelligence (AI) system for categorizing events, said AI system comprising a first state and a second state, which software when running on said data processor:
- sets said AI system in said first state;
- receives data;
- deducts events from said data;
- categorizing said events in a first category type;
- upon categorizing one of said events as said first event in a predefined category of said first category type, sets said AI system to said second state, and
- receives subsequent data;
- deducts subsequent events from said data;
- categorizes said subsequent events in a second category type.
